# FASCICULE DE BREVET EUROPEEN

(11) **EP 2 348 812 B1**
(45) Date de publication et mention de la délivrance du brevet: **20.03.2013**
(21) Numéro de dépôt: 09776587.9
(22) Date de dépôt: 06.05.2009
(51) Int. Cl.: A01G 5/04

(54) **SUPPORT AUTONOME ANTI-RENVERSEMENT POUR BOUQUET DE FLEURS**
AUTONOMER TRÄGER MIT UMKIPPSCHUTZ FÜR BLUMENSTRÄUSSE
AUTONOMOUS ANTI-SPILL CARRIER FOR A BOUQUET OF FLOWERS

(30) Priorité: 14.11.2008 LU 91496
(43) Date de publication de la demande: 03.08.2011
(73) Titulaire: Charrin, Philippe, 26600 Beaumont Monteux (FR)
(72) Inventeur: Charrin, Philippe, 26600 Beaumont Monteux (FR)
(74) Mandataire: Dennemeyer & Associates S.A.
(86) Numéro de dépôt international: PCT/EP2009/003229
(87) Numéro de publication internationale: WO 2010/054705

(56) Documents cités:
- WO-A-96/37133
- WO-A-98/46501
- WO-A-2006/045812
- GB-A- 2 236 238

## Description

La présente invention concerne un support pour bouquet de fleurs selon la revendication 1.

L'état de la technique comprend un support pour le pied d'un sapin de Noel, néanmoins ce type de support fait partie d'un domaine technique éloigné (arbres) du domaine des bouquets de fleurs et possède toujours une base inférieure fermée. L'homme du métier ne l'aurait jamais pris en considération pour l'activité inventive.

Il existe différent types de support pour bouquet à réserve d'eau mais aucun n'allie les fonctions de support et de contenant autonome et tous sont confrontés en cas de renversement au problème de l'écoulement de l'eau en dehors du support. On connaît des supports pour bouquets du document GB-A-2236238.

Le support tel que défini dans la revendication 1 de la présente invention constitue la solution au problème du renversement des supports de bouquets de fleurs à réserve d'eau lors du transport.

L'invention est constituée d'une base ouverte et plane et dans sa partie opposée d'une jupe pouvant redescendre dans le volume ou rester sur un niveau plan en réduisant le diamètre proportionnellement à la base ; on obtient alors un volume plus ou moins conséquent.

La présente invention concerne un support pour bouquet de fleurs constitué d'un récipient (1) délimitant un volume interne (2) et pourvu à l'une de ses extrémité d'une base inférieure (3) et à l'extrémité opposée d'une partie supérieure (4), ladite base inférieure (3) ayant une surface supérieure à la surface de la partie supérieure (4), ladite partie supérieure (4) possédant au moins une ouverture (5), ladite ouverture (5) se prolongeant à partir de la partie supérieure (4) vers l'intérieur du volume interne (2) par une jupe (6). La partie supérieure (4) possédant au moins une ouverture (5) dont le diamètre peut être inférieur ou égal au diamètre de la partie supérieure (4).

Le support de la présente invention peut être de forme tronconique et sa base inférieure (3) est plane, la base inférieure (3) peut être ouverte ou fermée et la partie supérieure circulaire (4) peut aussi être plane.

Le support de la présente invention comprend une jupe (6) qui s'étend à partir de la partie supérieure (4) en direction de la base inférieure (3) sans toutefois reposer sur ladite base inférieure (3).

La hauteur (h1) de la jupe du support de la présente invention peut correspondre à 1/4, 1/3, 1/2, 2/3, 3/4 de la hauteur totale (H) du récipient (1). La jupe (6) peut être une jupe périphérique continue ou une jupe munie d'au moins une ouverture (7) sur sa périphérie. La jupe (6) peut être munie d'au moins une ouverture, ladite jupe s'étendant à partir de la partie supérieure (4) en direction de la base inférieure (3) et la jupe (6) peut reposer sur ladite base inférieure (3).

L'ouverture inférieure (8) de la jupe (6) peut être située à proximité de la base inférieure (3).
La jupe (6) peut servir de barrage pour empêcher l'écoulement d'une réserve d'eau (16) hors du récipient étanche (1) en cas de renversement du récipient étanche (1).
La jupe (6) peut être de forme cylindrique, conique, tronconique, pyramidale ou d'un tonneau.

Un couvercle (9) ou autre moyen de fermeture peut être fixé (par agrafage, soudage, clipsage, collage ou tout autre moyen de fixation male-femelle) à la base inférieure (3) du récipient (1) en vue de former un récipient étanche.
Le couvercle (9) peut comprendre le long de sa périphérie une pluralité de lamelles (13) solidaires du couvercle (9) et pouvant se rabattre le long de la paroi (11) du récipient afin de stabiliser le bouquet de fleurs.
De plus dans tous les cas de figure décrits, une parfaite stabilité du bouquet est garantie ainsi qu'une garantie de maintien de l'eau à l'intérieur du récipient (1) en cas de renversement accidentel du support.

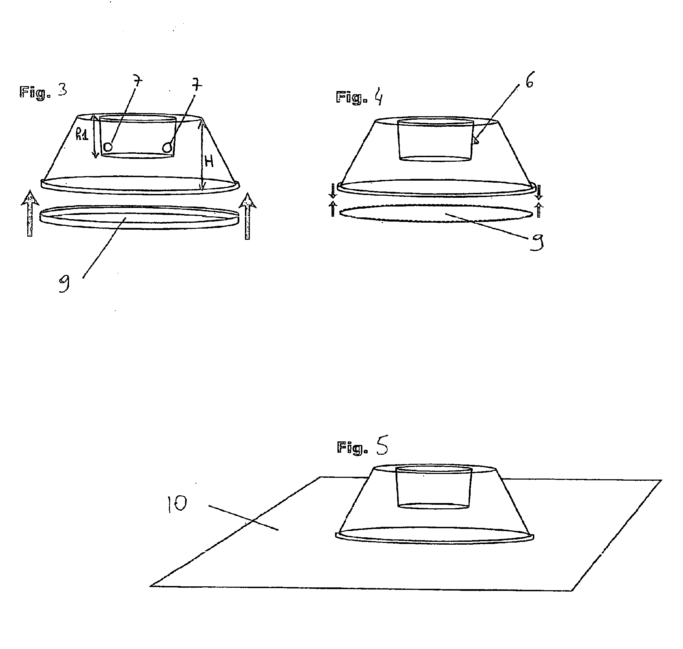

Le support de la présente invention peut avoir sa base inférieure (3) ouverte et le récipient (1) à base inférieure ouverte peut être enveloppé par une feuille d'emballage étanche (10), décorative ou non décorative, placée sous la base inférieure du récipient et remontée le long de la paroi (11) du récipient, le support (1) de base ouverte (3) pourra aussi être posé (figure 5) et soudé ou collé à la feuille d'emballage (10) afin d'en operculer l'ouverture (3), l'ensemble récipient à base inférieure ouverte-feuille d'emballage (10) étanche formant un récipient (1) fermé étanche à l'eau, l'ensemble récipient à base inférieure ouverte-feuille d'emballage étanche étant maintenu en place par un lien (12).

Le récipient (1) étanche peut être entièrement enveloppé par un dispositif de présentation de bouquet de fleur conique (15), celui-ci pouvant soit être fixé au couvercle (9) (par agrafage, soudage, clipsage, collage ou tout autre moyen de fixation), soit simplement reposer sur le couvercle (9).

Un dispositif de présentation de bouquet de fleur conique (14) peut aussi reposer sur la partie supérieure (4) du récipient, l'ensemble récipient (1)- dispositif de présentation de bouquet de fleur conique (14) ayant une forme conique.

Un objet pouvant retenir l'eau (16) par absorption (par exemple une éponge, une mousse) peut être placé dans le volume interne (2) du récipient (1) afin de mieux retenir l'eau tout en l'empêchant de se répandre et restituant l'eau par gravité lorsque le bouquet et remis en position verticale.

Une feuille imperméable (étanche) peut venir draper tous (sans exception) les modes de réalisation de la présente invention.

La base inférieure (3) du support de la présente invention peut présenter une bordure avec un renflement (16) extérieur ou intérieur de stabilisation. La base inférieure (3) peut être de forme circulaire, carrée, rectangulaire, en huit, en trèfle, en étoile, en pentagone, en hexagone, en heptagone, en octogone ou triangulaire.

Le support peut être réalisé en toute matière (par exemple : en matière pastique rigide, en bois, en métal, en carton imperméable etc ...).

La base inférieure (3) est de forme quelconque et la partie supérieure (4) est de préférence circulaire.

### Figures :

Figure la : montre le récipient (1) de la présente invention avant introduction du bouquet de fleurs dans celui-ci.

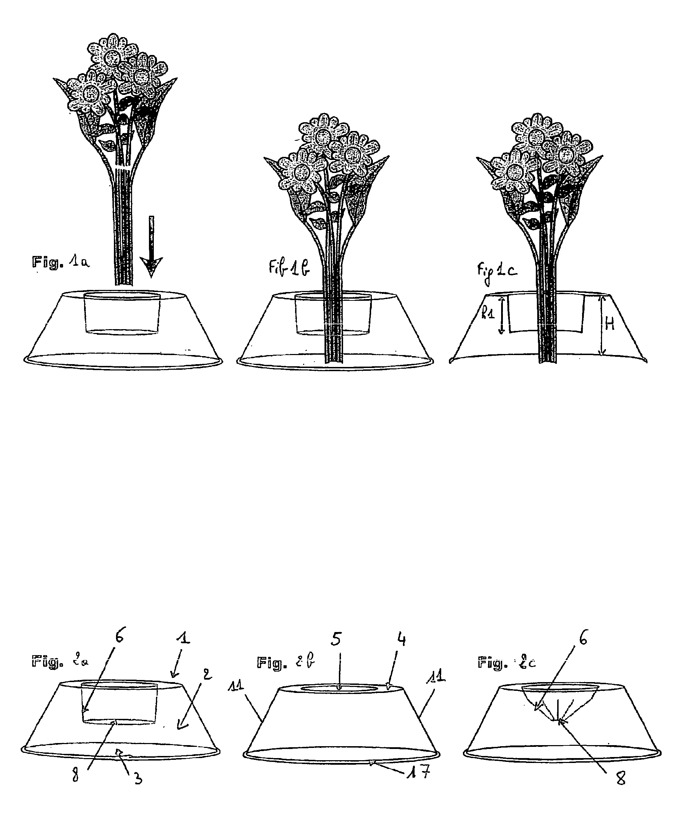

Figure 1b : montre le récipient (1) de la présente invention après introduction du bouquet de fleurs dans celui-ci. La jupe (6) possédant une ouverture supérieure et une ouverture inférieure par lesquelles les tiges du bouquet de fleurs sont introduites à l'intérieur du récipient (1).
Figure 1b : montre une vue en coupe du récipient (1) de la présente invention après introduction du bouquet de fleurs dans celui-ci.
Figure 2a : montre le récipient (1) de la présente invention avec une jupe (6) cylindrique vue par transparence à travers le récipient (1).
Figure 2b : montre le support de la présente invention (vue en non transparence) avec sa base inférieure (3) présenteant une bordure avec un renflement (16) extérieur ou intérieur de stabilisation.
Figure 2c : montre le récipient (1) de la présente invention avec une jupe (6) conique vue par transparence à travers le récipient (1).
Figure 3 : montre le récipient (1) de la présente invention et un couvercle (9), avec un rebord sur toute sa circonférence, qui peut être fixé au récipient (1). La jupe (6) étant trouée (7) dans sa partie inférieure. Avec le clipsage d'un couvercle sur la base inférieure l'invention devient un récipient (vase) étanche.
Figure 4 : montre le récipient (1) de la présente invention et un couvercle (9) sans rebord qui peut être fixé au récipient (1). L'étanchéité peut aussi être obtenue par operculage en thermique ou HF ou collage d'une feuille simple dit opercule.
Figure 5 : montre le récipient (1) de la présente invention avec sa jupe (6) vue par transparence et une feuille imperméable (10) placée sous la base inférieure (3) du support. L'économie du système de fermeture ou d'operculage peut être obtenue par soudure directement sur la feuille d'emballage étanche ou par équipement de la feuille imperméable ou de la base inférieure du support avec tout moyen collant afin de rendre étanche le volume interne du support.

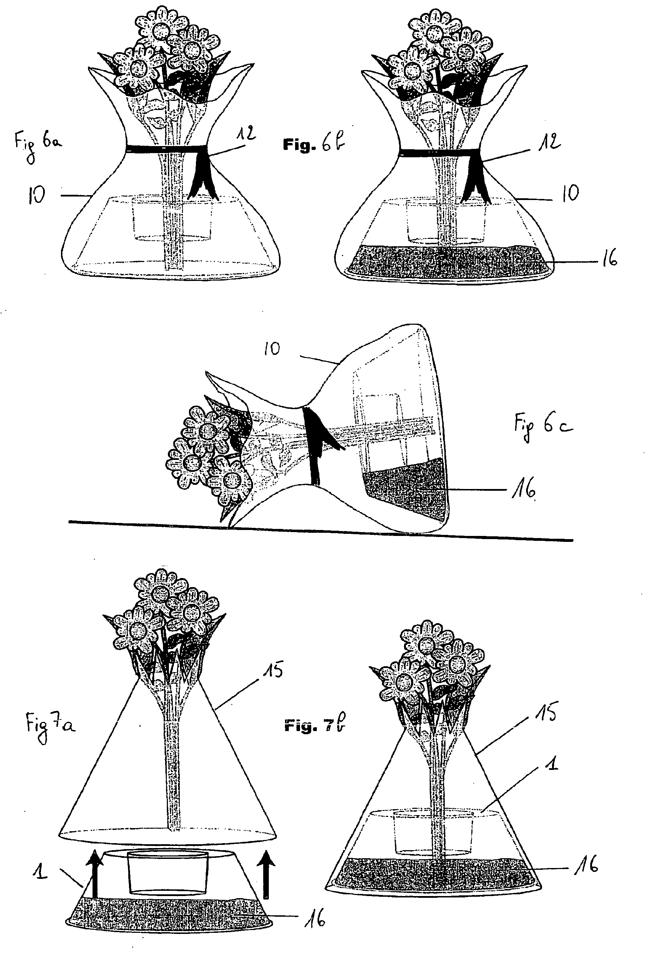

Figure 6a : montre le récipient (1) sans eau de la présente invention enveloppé par une feuille imperméable (10) remontée le long des parois (11) du récipient (1), le tout étant maintenu par un lien (12).
Figure 6b : correspond au support de la figure 6a avec de l'eau (16) à l'intérieur du récipient (1). Dans tous les cas il suffira à l'opérateur de faire pénétrer les tiges du bouquet à l'intérieur du volume de la jupe (6), de remonter la feuille sur la paroi (11) du support et d'attacher le tout par tout moyen à sa convenance, tel qu'un lien (12) pour restituer une forme de bouquet a réserve d'eau.
Figure 6c : correspond au support de la figure 6b renversé et cette figure montre que l'eau (16) ne s'écoule pas à l'extérieur du support grâce à la combinaison des caractéristiques du support.
Figure 7a : montre le récipient (1) avec de l'eau (16), 1 récipient (1) étant surmonté d'un dispositif conique de présentation de bouquets de fleurs.
Figure 7b : montre l'ensemble récipient (1) avec de l'eau (16) et le dispositif conique de présentation de bouquets de fleurs en position finale d'utilisation.

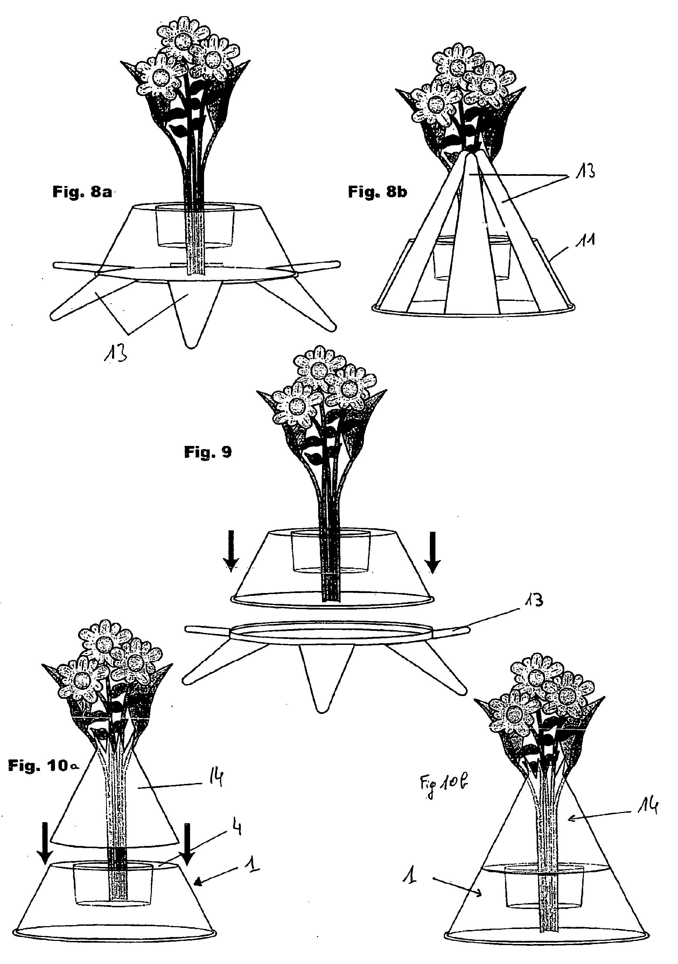

Figure 8a : montre le récipient (1) sans eau de la présente invention sans couvercle avec le périmètre de la base inférieure (3) étant muni de lamelles (13).
Figure 8b : montre le récipient (1) sans eau de la présente invention avec les lamelles (13) remontées le long de la paroi (11) du récipient et améliorant la stabilité du bouquet de fleurs en position verticale.
Figure 9 : montre le récipient (1) sans eau de la présente invention qui peut venir se fixer sur un couvercle (9) dont le périmètre est muni de lamelles (13).
Figure 10a : montre le récipient (1) sans eau de la présente invention avec un dispositif de présentation de bouquet de fleurs (14) venant reposer sur la partie supérieure (4) du récipient (1).
Figure 10b : montre le dispositif de présentation de bouquet de fleurs (14) assemblé au récipient (1) sans eau de la présente invention. Dans ce cas le support retient l'eau de manière autonome en "bloquant" un certain volume d'eau dans la partie creuse en cas de chute du bouquet seul ou du bouquet dans son emballage. Le support est ainsi rehaussé d'un cône "style bouquett'o ®" pour compléter sa hauteur et améliorer le la stabilité et le maintien du bouquet.

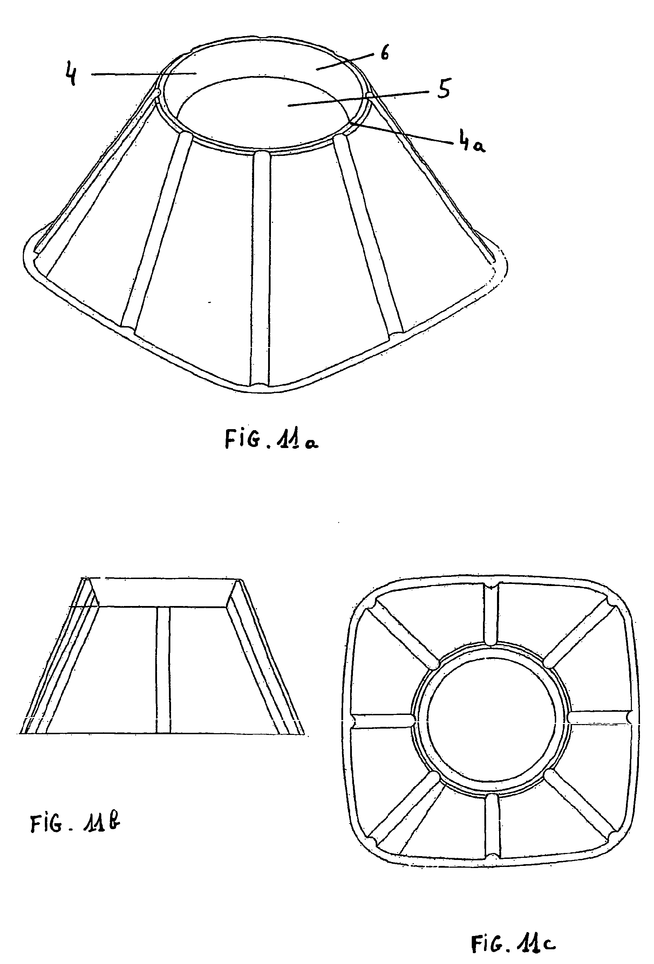

Figure 11a : montre le récipient (1) avec l'ouverture (5) occupant la majorité de la surface de la partie supérieure (4). La partie supérieure (4) forme un périmètre (4a).
Figure 11b : montre une vue de coté du récipient (1) de la figure 11a.
Figure 11c : montre une vue du dessus du récipient (1) de la figure 11a.

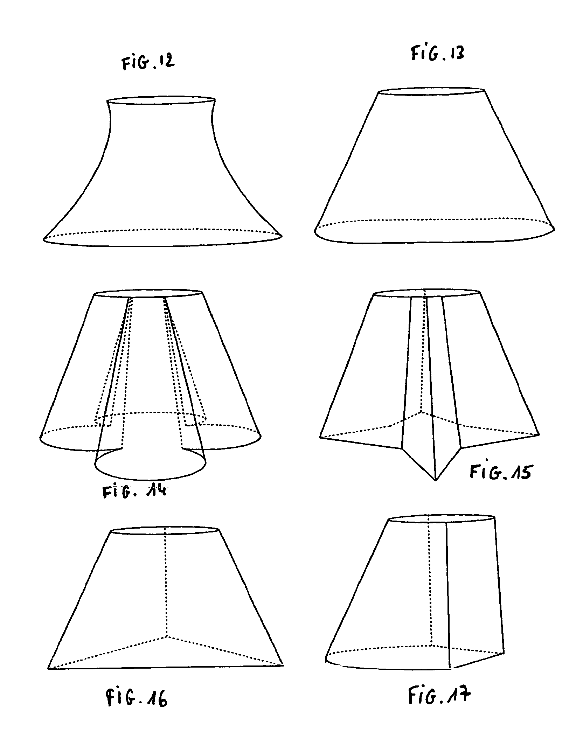

Figure 12 : montre le récipient (1) avec une base inférieure circulaire et les parois latérales concaves (càd avec une courbure en creux).
Figure 13 : montre le récipient (1) avec une base inférieure circulaire et les parois latérales droites (càd sans courbure).
Figure 14 : montre le récipient (1) avec une base inférieure en forme de trèfle et les parois latérales droites (càd sans courbure).
Figure 15 : montre le récipient (1) avec une base inférieure en forme d'étoile et les parois latérales droites (càd sans courbure).
Figure 16 : montre le récipient (1) avec une base inférieure en forme de triangle et les parois latérales droites (càd sans courbure).
Figure 17 : montre le récipient (1) avec une base inférieure en forme géométrique complexe et les parois latérales droites (càd sans courbure).

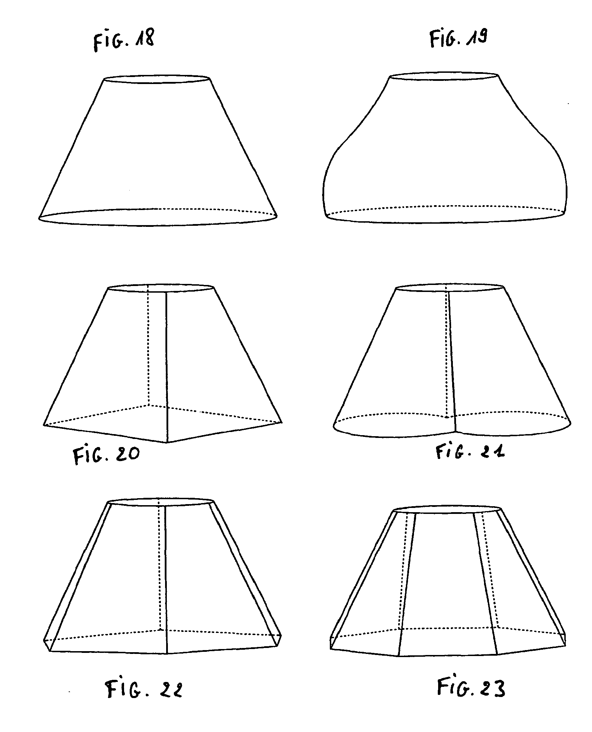

Figure 18 : montre le récipient (1) avec une base inférieure circulaire et les parois latérales droites (càd sans courbure).
Figure 19 : montre le récipient (1) avec une base inférieure circulaire et les parois latérales courbées.
Figure 20 : montre le récipient (1) avec une base inférieure carrée et les parois latérales droites.
Figure 21 : montre le récipient (1) avec une base inférieure en forme de huit et les parois latérales droites.
Figure 22 : montre le récipient (1) avec une base inférieure en forme d'hexagone et les parois latérales droites.
Figure 23 : montre le récipient (1) avec une base inférieure en forme d'octogone et les parois latérales droites.

## Revendications

1. Support pour bouquet de fleurs constitué d'un récipient (1) délimitant un volume interne (2) et pourvu à l'une de ses extrémité d'une base inférieure (3) et à l'extrémité opposée d'une partie supérieure (4), ladite base inférieure (3) ayant une surface supérieure à la surface de la partie supérieure (4), ladite partie supérieure (4) possédant au moins une ouverture (5), ladite ouverture (5) se prolongeant à partir de la partie supérieure (4) vers l'intérieur du volume interne (2) par une jupe (6) **caractérisé en ce que** la base inférieure (3) est ouverte et le récipient à base inférieure, ouverte est enveloppé par une feuille d'emballage étanche (10) placée sous la base inférieure (3) du récipient et remontée le long de la paroi (11) du récipient, l'ensemble récipient à base inférieure ouverte-feuille d'emballage (10) étanche formant un récipient (1) fermé étanche à l'eau, l'ensemble récipient à base inférieure ouverte-feuille d'emballage étanche étant maintenu en place par un lien (12).

2. Support selon la revendication 1, **caractérisé en ce que** le support est de forme tronconique avec sa base inférieure (3) étant plane et ouverte ou fermée et la partie supérieure (4) circulaire étant aussi plane.

3. Support selon la revendication 1, **caractérisé en ce que** la jupe (6) est une jupe s'étendant à partir de la partie supérieure (4) en direction de la base inférieure (3) sans reposer sur ladite base inférieure (3).

4. Support selon la revendication 3, **caractérisé en ce que** la hauteur (h1) de la jupe correspond à 1/4, 1/3, 1/2, 2/3, 3/4 de la hauteur (H) du récipient (1).

5. Support selon la revendication 4, **caractérisé en ce que** la jupe (6) est une jupe périphérique continue ou une jupe munie d'au moins une ouverture (7) sur sa périphérie.

6. Support selon la revendication 1, **caractérisé en ce que** la jupe (6) est une jupe munie d'au moins une ouverture, ladite jupe s'étendant à partir de la partie supérieure (4) en direction de la base inférieure (3) et repose sur ladite base inférieure (3).

7. Support selon la revendication 6, **caractérisé en ce que** l'ouverture inférieure (8) de la jupe (6) est située à proximité de la base inférieure (3).

8. Support selon la revendication 1, **caractérisé en ce que** la jupe (6) sert de barrage pour empêcher l'écoulement d'une réserve d'eau hors du récipient étanche (1) en cas de renversement du récipient étanche (1).

9. Support selon la revendication 1, **caractérisé en ce qu'**un couvercle (9) ou autre moyen de fermeture est fixé à la base inférieure (3) du récipient (1) en vue de former un récipient étanche.

10. Support selon la revendication 8, **caractérisé en ce que** la jupe (6) est de forme cylindrique, conique, tronconique, pyramidale ou d'un tonneau.

11. Support selon la revendication 9, **caractérisé en ce que** le couvercle (9) comprend le long de sa périphérie une pluralité de lamelles (13) pouvant se rabattre le long de la paroi (11) du récipient pour stabiliser le bouquet de fleurs.

12. Support selon la revendication 9, **caractérisé en ce que** le récipient (1) étanche est entièrement enveloppé par un dispositif de présentation de bouquet de fleur conique (15), celui-ci pouvant soit être fixé au couvercle (9) par tout moyen de fixation, soit simplement reposer sur le couvercle (9).

13. Support selon la revendication 9, **caractérisé en ce qu'**un dispositif de présentation de bouquet de fleur conique (14) peut reposer sur la partie supérieure (4) du récipient, l'ensemble récipient (1)- dispositif de présentation de bouquet de fleur conique (14) ayant une forme conique.

14. Support selon la revendication 1, **caractérisé en ce qu'**un objet pouvant retenir l'eau (16) par absorption est placé dans le volume interne (2) du récipient (1).

15. Support selon la revendication 1, **caractérisé en ce que** la base inférieure (3) est de forme circulaire, carrée, rectangulaire, en huit, en trèfle, en étoile, en pentagone, en hexagone, en heptagone, en octogone ou triangulaire.

16. Support selon la revendication 1, **caractérisé en ce que** le support (1) de la base ouverte (3) est posé, soudé ou collé à la feuille d'emballage (10) afin d'en operculer l'ouverture de la base ouverte (3).

## Claims

1. A carrier for a bouquet of flowers made up of a container (1) delimiting an inner volume (2) and provided at one end with a lower base (3) and at the opposite end with an upper portion (4), said lower base (3) having a surface larger than the surface of the upper portion (4), said upper portion (4) having at least one opening (5), said opening (5) extending from the larger portion (4) toward the inside of the inner volume (2) by a skirt (6),
**characterized in that** the lower base (3) is open and the container with the open lower base is surrounded by a sealed wrapping sheet (10) placed under the lower base (3) of the container and raised along the wall (11) of the container, the assembly of the container with the open lower base and the sealed packaging sheet (10) forming a watertight closed container (1), the assembly of the container with an open lower base and the sealed wrapping sheet being kept in place by a connector (12).

2. The carrier according to claim 1, **characterized in that** the carrier has a tapered shape whereof the lower base (3) is planar and open or closed and the circular upper portion (4) also being planar.

3. The carrier according to claim 1, **characterized in that** the skirt (6) is a skirt extending from the upper portion (4) toward the lower base (3) without resting on said lower base (3).

4. The carrier according to claim 3, **characterized in that** the height (h1) of the skirt corresponds to 1/4, 1/3, 1/2, 2/3, 3/4 of the height (H) of the container (1).

5. The carrier according to claim 4, **characterized in that** the skirt (6) is a continuous peripheral skirt or a skirt provided with at least one opening (7) on its periphery.

6. The carrier according to claim 1, **characterized in that** the skirt (6) is a skirt provided with at least one opening, said skirt extending from the upper portion (4) toward the lower base (3) and resting on said lower base (3).

7. The carrier according to claim 6, **characterized in that** the lower opening (8) of the skirt (6) is situated near the lower base (3).

8. The carrier according to claim 1, **characterized in that** the skirt (6) serves as a dam to prevent a reserve of water from flowing outside the sealed container (1) in the event the sealed container (1) is tipped over.

9. The carrier according to claim 1, **characterized in that** a lid (9) or other closing means is fastened to the lower base (3) of the container (1) so as to form the sealed container.

10. The carrier according to claim 8, **characterized in that** the skirt (6) is cylindrical, conical, tapered, pyramidal, or barrel-shaped.

11. The carrier according to claim 9, **characterized in that** the lid (9) comprises a plurality of strips (13) along its periphery that can fold down along the wall (11) of the container to stabilize the bouquet of flowers.

12. The carrier according to claim 9, **characterized in that** the sealed container (1) is completely surrounded by a conical flower display device (15), which can either be fastened to the lid (9) by any fastening means, or simply rest on the lid (9).

13. The carrier according to claim 9, **characterized in that** a conical flower display device (14) can rest on the upper portion (4) of the container, the assembly of the container (1) and the conical flower display device (14) having a conical shape.

14. The carrier according to claim 1, **characterized in that** an object capable of retaining water (16) by absorption is placed in the inner volume (2) of the container (1).

15. The carrier according to claim 1, **characterized in that** the lower base (3) is circular, square, rectangular, figure eight-, clover-, star-shaped, pentagonal, hexagonal, heptagonal, octagonal or triangular.

16. The carrier according to claim 1, **characterized in that** the support (1) of the open base (3) is placed, welded or glued to the wrapping sheet (10) so as to cover the opening of the open base (3) thereof.

## Patentansprüche

1. Träger für einen Blumenstrauß, umfassend einen Behälter (1), der ein inneres Volumen (2) begrenzt, und ausgestattet an einem seiner Enden mit einer unteren Basis (3) und am gegenüber liegenden Ende mit einem oberen Teil (4), wobei die untere Basis (3) eine Fläche aufweist, die über der Fläche des oberen Teils (4) liegt, wobei der obere Teil (4) mindestens eine Öffnung (5) aufweist, wobei sich die Öffnung (5) vom oberen Teil (4) zum Inneren des innern Volumens (2) durch eine Schürze (6) erstreckt,
**dadurch gekennzeichnet, dass** die untere Basis (3) geöffnet ist und der Behälter mit der unteren geöffneten Basis mit einer dichten Verpackungsfolie (10) umwickelt ist, die unter der unteren Basis (3) des Behälters angeordnet ist und entlang der Wand (11) des Behälters nach oben gezogen ist, wobei die Einheit aus dem Behälter mit der geöffneten unteren Basis und der dichten Verpackungsfolie (10) einen geschlossenen, wasserdichten Behälter (1) bildet, wobei die Einheit aus dem Behälter mit der geöffneten unteren Basis und der dichten Verpackungsfolie durch eine Verbindung (12) an ihrer Stelle gehalten wird.

2. Träger nach Anspruch 1, **dadurch gekennzeichnet, dass** der Träger eine kegelstumpfartige Form aufweist, wobei seine untere Basis (3) eben und geöffnet oder geschlossen ist, und der runde obere Teil (4) ebenfalls eben ist.

3. Träger nach Anspruch 1, **dadurch gekennzeichnet, dass** die Schürze (6) eine Schürze ist, die sich vom oberen Teil (4) in Richtung der unteren Basis (3) erstreckt, ohne auf der unteren Basis (3) aufzuliegen.

4. Träger nach Anspruch 3, **dadurch gekennzeichnet, dass** die Höhe (h1) der Schürze 1/4, 1/3, 1/2, 2/3, 3/4 der Höhe (H) des Behälters (1) entspricht.

5. Träger nach Anspruch 4, **dadurch gekennzeichnet, dass** die Schürze (6) eine durchgehende periphere Schürze ist oder eine Schürze, die mindestens mit einer Öffnung (7) auf ihrer Peripherie ausgestattet ist.

6. Träger nach Anspruch 1, **dadurch gekennzeichnet, dass** die Schürze (6) eine Schürze ist, die mindestens mit einer Öffnung ausgestattet ist, wobei sich die Schürze vom oberen Teil (4) in Richtung der unteren Basis (3) erstreckt und auf der unteren Basis (3) aufliegt.

7. Träger nach Anspruch 6, **dadurch gekennzeichnet, dass** sich die untere Öffnung (8) der Schürze (6) in der Nähe der unteren Basis (3) befindet.

8. Träger nach Anspruch 1, **dadurch gekennzeichnet, dass** die Schürze (6) als Sperre dient, um das Auslaufen eines Wasservorrats aus dem dichten Behälter (1) für den Fall des Umstürzens des dichten Behälters (1) zu verhindern.

9. Träger nach Anspruch 1, **dadurch gekennzeichnet, dass** ein Deckel (9) oder ein anderes Verschlussmittel an die untere Basis (3) des Behälters (1) befestigt ist, um einen dichten Behälter zu bilden.

10. Träger nach Anspruch 8, **dadurch gekennzeichnet, dass** die Schürze (6) eine zylindrische, konische, kegelstumpfartige, pyramidenartige oder tonnenartige Form aufweist.

11. Träger nach Anspruch 9, **dadurch gekennzeichnet, dass** der Deckel (9) entlang seiner Peripherie eine Vielzahl von Lamellen (13) aufweist, die entlang der Wand (11) des Behälters heruntergeklappt werden können, um den Blumenstrauß zu stabilisieren.

12. Träger nach Anspruch 9, **dadurch gekennzeichnet, dass** der dichte Behälter (1) vollständig durch eine konische Vorrichtung zur Präsentation des Blumenstraußes (15) umwickelt ist, wobei dieser entweder durch jedes Befestigungsmittel an den Deckel (9) befestigt sein kann oder einfach auf dem Deckel (9) aufliegen kann.

13. Träger nach Anspruch 9, **dadurch gekennzeichnet, dass** eine konische Vorrichtung zur Präsentation eines Blumenstraußes (14) auf dem oberen Teil (4) des Behälters (4) aufliegen kann, wobei die Einheit aus Behälter (1) und konischer Vorrichtung zur Präsentation eines Blumenstraußes (14) eine konische Form aufweist.

14. Träger nach Anspruch 1, **dadurch gekennzeichnet, dass** ein Gegenstand, der durch Absorption Wasser zurückhalten kann (16), im inneren Volumen (2) des Behälters (1) angebracht ist.

15. Träger nach Anspruch 1, **dadurch gekennzeichnet, dass** die untere Basis (3) eine runde, quadratische, rechtwinklige, 8-förmige, kleeblattartige, sternartige, fünfeckige, sechseckige, siebeneckige, achteckige oder dreieckige Form aufweist.

16. Träger nach Anspruch 1, **dadurch gekennzeichnet, dass** der Träger (1) der offenen Basis (3) an die Verpackungsfolie (10) gesetzt, geschweißt oder geklebt ist, um die Öffnung der offenen Basis (3) damit zu bedeckeln.
